# EUROPEAN PATENT APPLICATION

(11) **EP 1 517 559 A2**
(43) Date of publication of application: **23.03.2005**
(21) Application number: 04010055.4
(22) Date of filing: 03.06.1999
(51) Int. Cl.: H04N 7/24, H04N 7/173

(54) **Television delivery system**

(30) Priority: 04.06.1998 US 88135 P; 05.06.1998 GB 9812218
(62) Divisional of application: 99923344.8
(71) Applicant: ImagicTV Inc., Saint John, New Brunswick E2L 3Y2 (CA)
(72) Inventor: Cameron, Allan, New Brunswick E2L 5P6 (CA); Pomeroy, Trenton, New Brunswick E2H 2K5 (CA); Alston, David, New Brunswick E0G 3G0 (CA); Higgins, Sean, New Brunswick E2K 2N4 (CA); Jones, Ian, New Brunswick E2E 4Y1 (CA); Swansburg, Darren, New Brunswick E2E 1B1 (CA); Furlong, Jeff, New Brunswick E2E 4P9 (CA)
(74) Representative: Bewley, Ewan Stuart

(57) **Abstract**

A system for delivering broadcast television over Internet Protocol is described. A broadcast provider obtains television signals from traditional sources such as satellite or cable and encodes the signals for delivery to a subscriber/user over an IP enabled broadband network. An IP multicast protocol is used for conventional TV programming and near video on demand movie selections. An IP unicast protocol is used for video on demand services. A user/subscriber has a television/set top box or a PC with appropriate software to decode the IP format for program viewing. An interactive electronic program guide, viewable on the subscriber's monitor, provides the subscriber with schedule information relating to programs available for viewing.

## Description

### Technical Field

This invention relates generally to a delivery system for digital television and more particularly to a system and method for the delivery and end to end management of interactive television and integrated Web services.

### Background Art

With the proliferation of TV broadcast providers delivering regular programming as well as specialty services, such as pay per view and first run movies, TV viewers are frequently faced with scheduling problems in order to view their favorite programs. The scheduling problem is even more severe in a typical household having one television with several potential viewers each having their own viewing preferences.

TV broadcasts are currently delivered through service providers such as cable companies, and satellite operators and, of course, direct broadcast reception via traditional antennas and rabbit ears. Conventional cable service requires the installation of a dedicated cable to the subscriber's residence. Satellite broadcast service requires that the user have a satellite dish located on or somewhere close to their residence. Antennas and rabbit ears are generally limited to the reception of local programming. Additionally, program delivery via all of these services is at the convenience of the service provider or broadcaster and, hence, the user or subscriber must arrange his or her schedule to coincide with program availability.

It is well known that the purchase of personal computers by homeowners has increased dramatically in recent years. Typically, these computers are used for word processing, accounting and other record keeping purposes. Most of these computers also have modems for connection to the Internet through an Internet Service Provider utilizing conventional telephone service. Frequently, however, these modems have a low baud rate that makes downloading of information, particularly graphics, unacceptable.

### Disclosure of the Invention

In view of the foregoing there is a requirement to provide an improved method of delivering broadcast television and providing Internet access to subscribers of such services. The present invention relates to a system that provides the hardware and the necessary software for a broadcast provider, which may be a telephone company, to offer a wide range of managed broadcast television services to consumers. In accordance with various aspects of the invention these services include: end to end network administration; Interactive Program Guide (IPG) functionality offering self-serve pay-per-view, video on demand and Internet access; customer profile management; billing and payment capabilities; consumer arranged service options; channel packaging; user activity collection; statistics and reporting; video games; basic television; and VCR functionality including self-serve viewing of previously broadcast programs.

Through the present invention broadcast providers such as telephone companies are afforded the opportunity to compete successfully in the broadcast TV market. With the combination of high speed, IP capable technologies, (for example, ATM, xDSL, MPEG-1 and MPEG-2, and IP-Multicasting) tied together with the systems of the present invention telephone companies no longer need to wait for future technology solutions.

Therefore in accordance with a first aspect of the invention there is provided a system for the delivery of broadcast television from a broadcast provider to a subscriber via the Internet Protocol (IP), the system comprising: means at the broadcast provider's location for retrieving broadcast television signals; means at the broadcast provider's location for configuring the television signals into IP format for transmission over a broadband backbone network; and a management system for managing a subscriber's access to the television signals.

In a preferred embodiment the system employs an interactive program guide (IPG) that offers a subscriber access to multiple scheduling and servicing functions including browsing and searching using a menu driven, 'point and click' process.

Further, the system contemplates the use of an IP Multicast protocol for TV broadcast and near video on demand services. Additionally, an IP Unicast protocol may be used for video on demand service.

Significantly, all of these features are delivered via IP and ATM technologies using a single point of access rather than a combination of delivery systems such as satellite and cable.

The present system makes use of a decoder at the subscriber's location to convert the IP format into a form for viewing on a television or computer monitor. The decoder for a television is incorporated into a set top box associated with the TV while the decoder for the computer monitor will typically be installed in the PC.

The management aspects of the invention result in the ability to remotely manage client devices (for example set top boxes) at the subscriber's location. Such management includes remote diagnostics and notification of data updates.

In accordance with a second aspect of the invention there is provided a method of delivering TV broadcast from a broadcast provider to a subscriber over a broadband, IP enabled network. The method comprises: obtaining broadcast TV signals for the broadcast provider; converting the broadcast signals to IP format; transmitting the converted signals over the network; and providing a management function to manage a subscriber's access to broadcast signals.

In a preferred embodiment the converted signals are in a MPEG encoded format.

### Brief Description of the Drawings

The invention will now be described in greater detail with reference to the attached drawings wherein:
Figure 1 is a high level diagram of a video broadcast system in accordance with one aspect of the present invention;
Figure 2 is a more detailed diagram of the system of Figure 1;
Figure 3 is an architectural block diagram of network elements;
Figure 4 illustrate the operational aspects of the Digital TV Manager;
Figure 5 is a layered diagram illustrating the relationship of system components;
Figure 6 is a depiction of one example of an interactive program guide (IPG);
Figure 7 illustrates an exemplary information banner appearing in the IPG;
Figure 8 illustrates an alternative IPG;
Figure 9 is a block diagram of the past TV concept according to on aspect of the invention; and
Figure 10 illustrates a system for concurrent transmission of MPEG-1 and MPEG-2 encoded signals.

### Best Mode for Carrying out the Invention

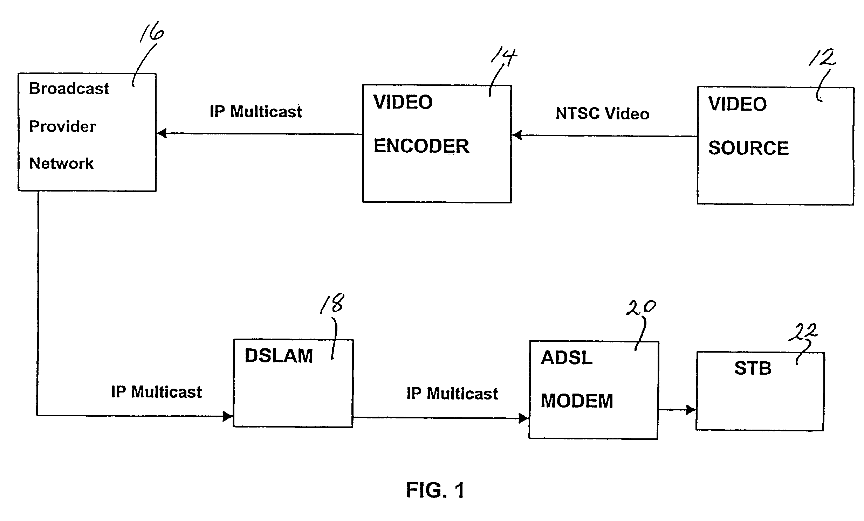

Figure 1 is a high level diagram of the basic elements of a video delivery system. Video source 12 retrieves signals for broadcast from various sources such as satellites. These signals are delivered to a video encoder 14 via NTSC (PAL, SECAM) video signals where they are converted to an IP Multicast form and subsequently sent out by a service provider 16 over a broadcast network to a Digital Subscriber Line Access Multiplexer (DSLAM) 18 which might be located in a telephone company central office. The IP Multicast signal from the DSLAM 18 is delivered to a subscribers residence over an xDSL link such as an Asymmetric Digital Subscriber Line (ADSL) where it is received by an ADSL modem 20 and delivered to a client server such as a Set Top Box (STB) 22.

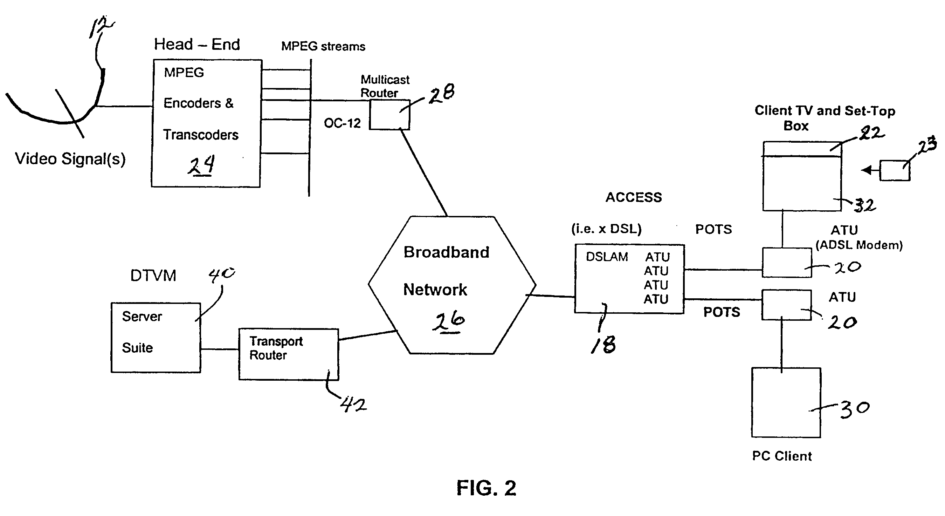

Figure 2 is a slightly more detailed representation of the basic concept of the present invention. As shown the video source 12 is a satellite located at head-end 24, which may be operated by a broadcast provider such as a telephone company or other service provider. Head end 24 interfaces with a broadband network 26 through a IP multicast router 28. As noted the broadband network is IP compatible (for example, IP Multicast) and has sufficient bandwidth capacity to transport encoded video signals. A subscriber to the broadcast service has access to the network via a broadband link such as a Digital Subscriber Line (DSL), for example Asymmetric Digital Subscriber Line (ADSL), Hybrid Fiber Coax (HFC) Fiber to the Curb (FTTC) or wireless service such as Local Multipoint Distribution System (LMDS). ADSL is of particular significance because it allows a broadcast provider to deliver programming to residential communities over existing copper wire without having to delay introduction of the services until the other access technologies become widely available.

The subscriber can access the TV broadcast with either a computer 30 having an associated CPU or a television 32 with a set top box 22. The set top box 22 in this implementation includes decoding circuitry for decoding MPEG-1 and/or MPEG-2 as well as IP Multicast. The computer 30 may be equipped with an appropriate MPEG card or appropriate software if the broadcast is to be viewed on a computer monitor. Set top box 22 may be activated by an interface unit such as a key board or remote device 23.

The broadcast provider as shown in Figures 1 and 2 is able to access television broadcast signals from various sources such as satellite 12, off-air broadcast or a storage medium providing movies or the like. The service provider encodes the broadcast signal (MPEG) and makes it available to service subscribers through the broadband network 26 using the Internet protocol.

Also shown in Figure 2 is the Digital TV Manager (DTVM) 40 that provides end to end management of services and resources of the integrated broadcast delivery system. DTVM 40 is linked to the network 26 via a transport router 42.

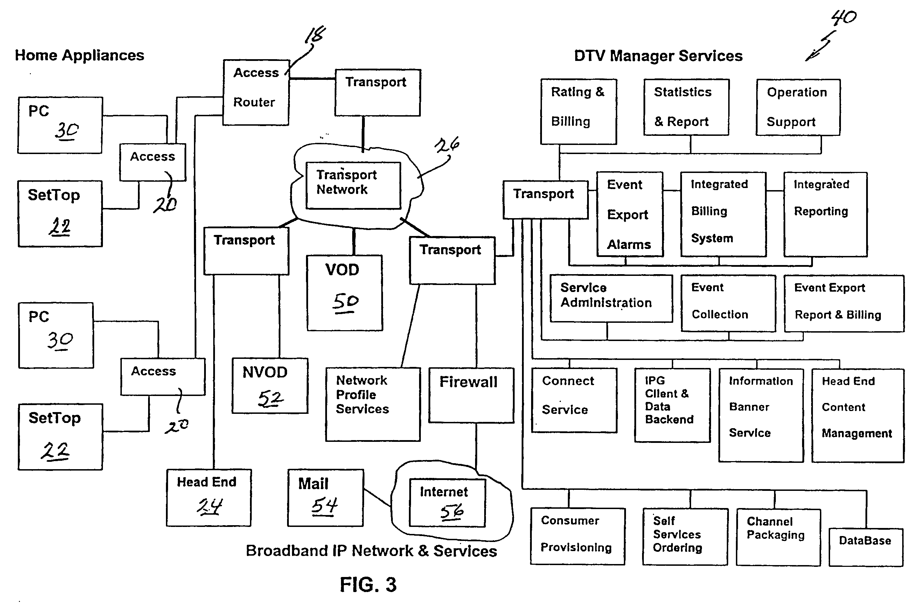

Figure 3 shows in greater detail the architectural configuration including the home or customer equipment, the broadband IP network and services and the DTVM services. In Figure 3 a second aspect of the deliverable services, i.e. Internet access is shown.

For standard broadcast signals and pay per view (PPV) or near video on demand (NVOD) services a multicast IP protocol is used in order to make efficient use of bandwidth. With this protocol numerous subscribers can have access to a program at the same time. For true video on demand service, however a unicast IP protocol is used.

Figure 3 illustrates in block diagram format the various elements of a broadcast delivery system according to the invention. As shown, the home appliance section includes a personal computer 30 and TV with set top box 22. Access to the network is through a xDSL access element such as an ADSL Transmission Unit (ATU) 20. The broadband IP Network and Services section includes access router 18 and the transport network 'cloud' 26. The transport network 26 has access to the various broadcast features such as Video on Demand (VOD) 50, Near Video on Demand (NVOD) 52 and e-mail 54 and Web access through the Internet 56.

The DTVM section 40 contains the multiple service features available to a subscriber of the system. These include but are not limited to billing and reporting, Interactive Program Guide (IPG) access, connection and channel packaging service and information banner service.

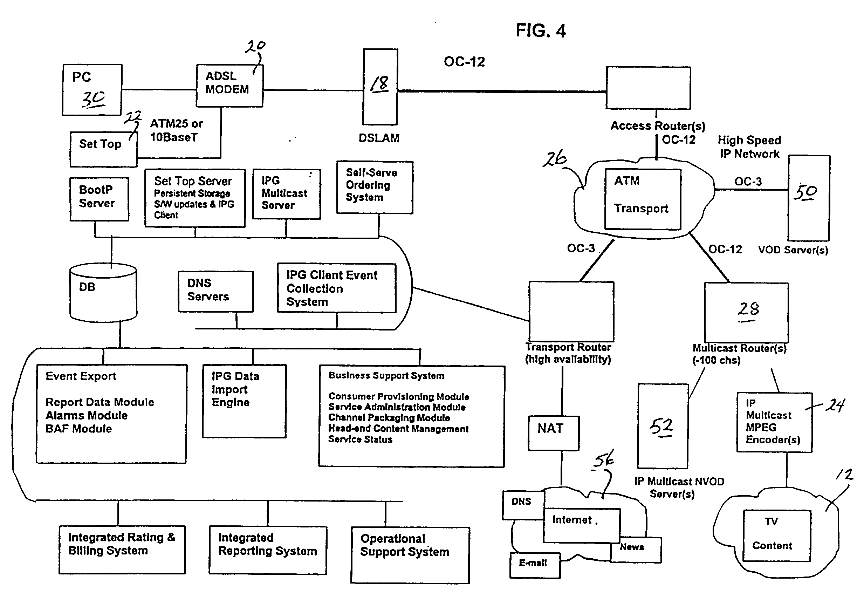

Figure 4 is an operational view of the system shown in Figure 3. The Digital Subscriber Line Access Multiplexer (DSLAM) 18 at the edge of the high speed IP network is a network device which may be located at a telephone company central office. The DSLAM enables a telephone company to provide subscribers with xDSL, such as ADSL, technology and to connect the subscriber to a fast backbone such as an ATM network. The ATM network routes the various broadcast services, previously mentioned, to the DSLAM which, in turn makes them accessible to subscribers via their computer 30 and/or set top box 22.

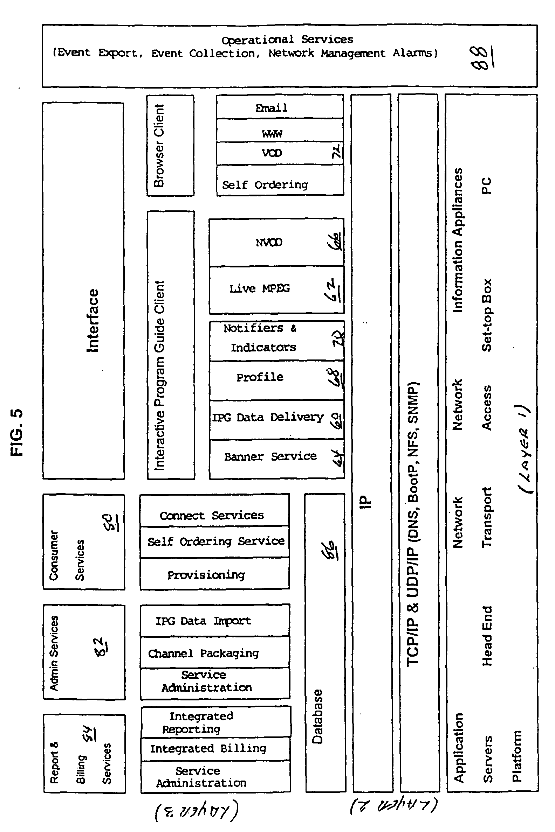

Figure 5 shows in a layer format the relationship between service and resource providers respecting the overall TV broadcast delivery system. At the bottom layer (layer 1) are the equipment and appliance suppliers such as set top box and computer suppliers, etc. The second layer (layer 2) represents the service provider such as a Telco who make available the IP and other protocols necessary to transport the services and features between the provider and subscriber. The third layer (layer 3) includes the functionality of the DTVM according to the present invention. As indicated these include Customer and Admin services, Reporting and Billing services and IPG and Browser clients.

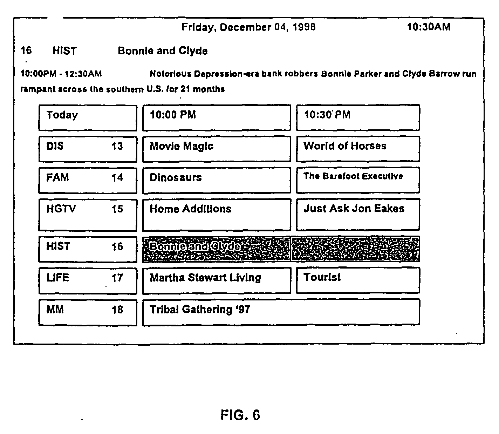

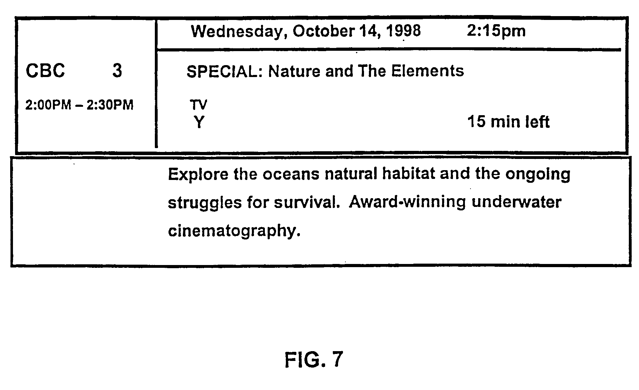

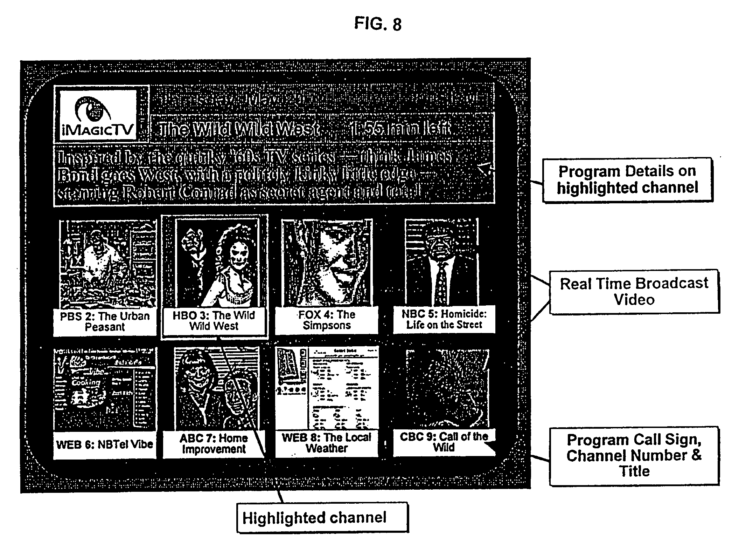

The DTVM allows Service Providers such as Telcos to offer an alternative to cable TV as presently known. Through the DTVM interactive TV can be integrated with Web Browsing, Web-based Email, VOD and pay per view services. Customized services including self-subscription is offered through the IPG. The IPG has access to TV program scheduling information such as TVGuide and makes this information available in electronic form for use by the subscriber. The IPG also provides access to VOD, NVOD, Internet programming as well as video and audio content. The subscriber accesses the IPG through the set top box or through the computer software. In the set top box implementation some memory may be available locally for storing specific information, or alternatively, the entire IPG is maintained in the network. The subscriber typically has a remote control or keyboard for interfacing with the IPG displayed on the television or computer monitor. Scheduling information may be in a grid format or in time slot form as will be discussed later. In any event the interactive nature of the IPG gives a subscriber control over many aspects of the broadcast system. Examples of IPG format and functionality are shown in Figures 6, 7 and 8. The DTVM in conjunction with IPG provides a subscriber with the ability to channel browse for TV programs and Web sites. A seven day channel lineup with scheduled automatic refresh is provided. The IPG client software is automatically updated by the system at regular intervals. Figure 6 shows one example of an IPG menu showing channel, time and schedule content information. Clicking on a highlighted selection displays a brief information banner with relevant data concerning program content and time remaining. This banner can be expanded as shown in Figure 7 to provide more detail if available. Figure 8 illustrates a second example of an IPG including a program detail banner containing information representing a highlighted channel.

As stated above the IPG is client software that operates in, for example, both a Windows and set top environment and provides a link to the client MPEG-1/MPEG-2 decoder and the client conditional access module. This software also provides the user with access to all broadcast content on the broadband multicast IP network as well as supporting services (i.e. subscription management).

Looking at Figure 5, the IPG data delivery block 60 relates to server software which provides the broadcast content schedules, previously mentioned, to the client IPG software based on the broadcast provider, customer location and customer profile. The server software has the responsibility to extract broadcast content schedules from various existing data sources.

The live MPEG encoder 62 is a component which provides real-time MPEG-1 or MPEG-2 encoding. It encodes analog video and audio inputs to produce MPEG-1 system at MPEG-2 Transport Streams for delivery via an IP multicast network.

The Banner Server 64 is server software which will provide scheduled ad insertion into the client IPG based on time of day, broadcast provider, the customer location and customer profile.

The Near Video-on-Demand (NVOD) Server 66 is a component that provides scheduled managed delivery of pre-recorded material via an IP multicast network.

The Customer profile management system/subscription management system 68 is software to store and track customer preferences, usage patterns, billing status, mailing addresses, client devices, service subscription, etc. It also provides the core data for many of the other components.

The Notifier and Indicator block 70 is software that gives the system the ability to script, send and display on the client server notices and messages such as calling ID and messages waiting.

The Video-on-Demand (VOD) Server 72 is a component which will provide the client access to VOD playback using interactive VCR controls for optimal control. It provides all the tools necessary to store, manage and deliver real-time, full-screen video and audio content.

A Conditional Access System (not shown) consists of both a source and destination module and is responsible for the encryption, as necessary, of data between the source and destination to protect copyrights.

The consumer Services section 80 includes such functionality as connection services, self ordering services and provisioning.

Administration services section 82 includes the importation of IPG data on a scheduled basis. Channel packaging which provides a consumer with the ability to manage their subscription (including self-service) system is a user interface to allow the end user to view, add and delete channels from their service subscription and check their usage and pay bills.

The Report and Billing Service system 84 provides integrated billing and reporting services which enables a subscriber to dynamically monitor service usage and to keep track of service costs on a self-serve basis.

The Database block 86 represents software to provide an information database of broadcast content unique to the broadcast distribution system provider to feed the IPG database.

The Operational Services component or End to End network management system 88 has management software to integrate the control of all the broadcast distribution system components into a networked management framework, including quality of service management and usage collection.

The interactive nature of the services provided by the broadcast system of the present invention gives a subscriber considerably more options as to what programs may be watched and when they may be viewed. Figure 6 provides an elementary example of an interactive broadcast schedule. As shown, program listings for a range of TV channels for a particular time period is given. With a listing such as this displayed on a TV monitor a viewer can scan the list, click on a desired program and the television will tune in to selected channel. Figure 8 illustrates another version of a program guide known as a preview IPG according to the present invention. Electronic program guides per se are known and it will be apparent to one skilled in the art that a form of chart best suited for the viewer's purpose can be designed.

The following description identifies some of the features available through the system of the present invention.

The system includes all the necessary software for a broadcast provider to offer broadcast television over Internet Protocol (IP), including IP multicast and unicast, which allow channel browsing by selecting IP multicast streams. IP multicast is characterized by the sending out of data to distributed servers on a multicast backbone network. For large amounts of data (including video transmissions), IP multicast is more efficient than normal Internet unicast transmissions because the server can broadcast a message to many recipients simultaneously. Unlike traditional Internet traffic that requires separate connections for each source-destination pair, IP multicasting allows many recipients to share the same source. This means that just one set of packets is transmitted for all the destinations.

The system has the ability to broadcast television digital signals over existing copper wire (DSL technologies), or any other broadband IP enabled network including LMDS and Hybrid Fiber Coax (HFC). According to the present invention the system has the ability to script, send and display messages to a client device screen in real time. Mechanisms used to accomplish this include IP multicast and/or SNMP. Messages may include icons that relate to the message available to be viewed. The user can press a key on a remote device to retrieve the corresponding message via SNMP or Unicast. The messages can include, for example, calling line ID notifications and message waiting indicators.

With this system the automatic service provisioning of a television channel online is possible. This eliminates the need for service provider or Telco trucks to go to the consumer's location to add or remove new channel offerings. The system allows consumers to change channel/package information online without the need for equipment and/or personnel's physical presence to be dispatched to a consumer's home to connect or disconnect the appropriate channels. Additionally, the DTVM allows management, remotely, of the client devices including the ability to query and reset key indicators such as system health indicators, e.g. MPEG diagnosis, application and network status, e.g. current viewed channel, current NFS server, and re-initialize the client device. This may be accomplished by, for example, a SNMP protocol. Further, the DVTM offers the ability to remotely inform the client device (e.g. STB) that new data and/or software is available and should be retrieved. This may be accomplished by, for example, IP multicast and/or SNMP.

Household consumers are able to self-service their accounts, add and remove channels, view and/or pay broadcast provider's real-time and end-of-period bill summaries online.

The interactive electronic program guide allows access to such enhanced video features as Video on Demand (VOD) or Near Video on Demand (NVOD). VOD is an umbrella term for a wide set of technologies that enables individuals to select videos from a central server for viewing on a television or computer screen. Additionally, the system affords a service provider to make available games on demand. This service is similar to VOD wherein Nintendo-type games are available for access by subscribers. A consumer can choose a game from the IPG or using a Web user interface. A subscriber is charged per game/time played.

It is also within the scope of the invention for a service provider to assign a URL to a channel number. A URL is an address used to enable an Internet browser program to find a particular Internet resource. Using this feature a subscriber could view a URL channel on the IPG similar to a video channel. Customers would be able to scan through URL channels and select a desired URL by entering the associated numbers from the remote device in the same way as video channels are selected. Going through a URL channel would switch the client device (STB, for example) to a web browser and thereby access a selected web page. In the same way the system can allow for channel hotlinks. While watching a program or when a program is highlighted on the IPG, the user can operate a remote entry device to activate a transfer to a dynamic web page. The web page could display, for example, information on the program, on the channel, or on the subject matter currently being shown. The system could also provide links to related topics.

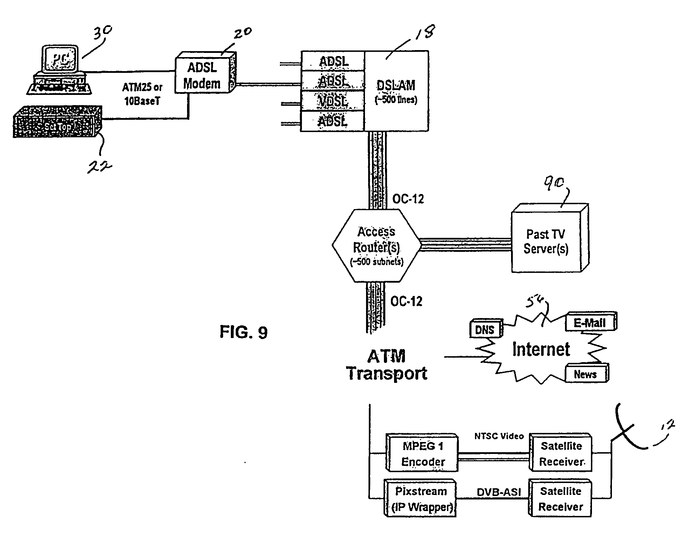

The system acts as a virtual VCR, with the ability to schedule, record and playback various programs in the network. It is anticipated that one or more servers in the network will maintain a recording of recently aired programs for access by a user at some finite time after the program was initially shown. Thus the system acts as a backup video source, enabling a viewer to retrieve previously aired programs for viewing at their choice of times. In the PC implementation the PC hard drive can optionally serve as a storage medium for previously aired programs. The system will also allow a customer to view a list of programs recorded, watch one of the programs from the list, set up the system to remotely record programming on a network storage device either in real time or in advance. A Remote storage device and associated software effectively records only one copy of a tagged program for access by multiple users later. Figure 9 shows the past TV and network VCR aspects of the invention. Past TV uses one or more video servers 90 in the network that continuously stores the IP Multicast TV content from a number of previous days (the number is application specific). The stored data is indexed and made available via the HTML based IPG through the STB. Network VCR uses the video server 90 to provide a subscriber with all the features of a VCR plus random access. The server 90 stores the multiple programs from the IP multicast TV content, indexes them and makes them available to the subscriber via the IPG.

The system acts as an intelligent agent providing the ability to remind a viewer of an upcoming program, enabling recommendations by the system to consumers about program content based on user criteria, system gathered data, and/or an outside source, such as TV Guide, movie critics, etc.

The system will also allow the multicast backbone network to activate a television set or a VCR. With this feature, a subscriber is able to have the television turn on at a predetermined time as well as set the VCR to record a program at the same time or another pre-selected time.

With the broadcast system of the present invention a viewer or subscriber will have the ability to personalize or customize channel selection, for example, create a list of favorite programs. Through this feature a viewer can scan the interactive broadcast schedule, select favorite programs for a viewing interval and have the television automatically switch to those channels at the appropriate times.

Virtual recording allows the viewer to "record"/store a program for viewing at a later time. In addition to this recording feature the system also gives a viewer a one touch search feature. Though this feature a viewer can configure the system with certain searching criteria such as program theme, by actor, by program/movie title, etc and with the one step searching feature retrieve the requested programming information from the IPG.

The viewer is also provided with the ability to view a program's video trailer from the electronic program guide when a viewer "clicks on"/selects that program.

The household consumer is given the ability through the interactive nature of the system to choose from different payment options for the programs selected for viewing, such as a channel subscription or pay-per-view (PPV). This means that a user can purchase a pay-per-view event in real time in a self-serve manner. A PPV event is determined using data sent and stored on the client device. Typically, before a user can view the PPV programming, he/she will be required to confirm the purchase of the event. This will normally involve the set up of a purchase password that requires the user to enter the correct password to purchase the PPV event and view the event at its scheduled time.

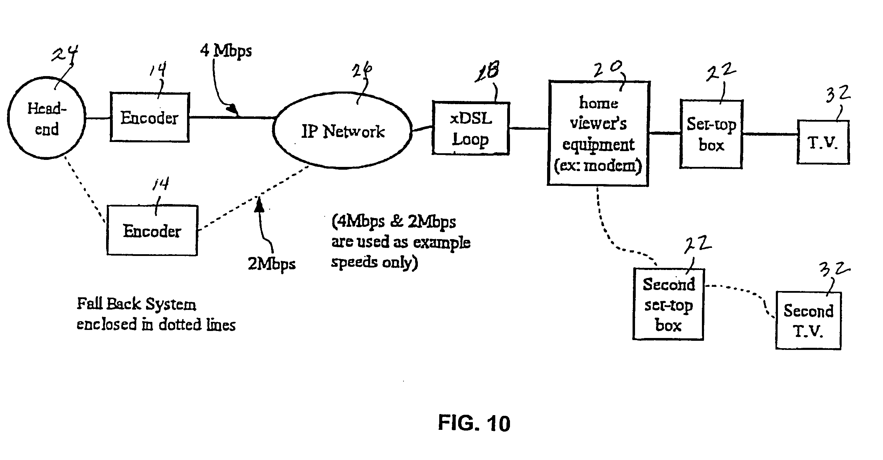

The provider is also able to provide concurrent transmission of each channel via MPEG-2 and MPEG-1 to allow fall back when access bandwidth becomes impaired or client does not support MPEG-2. This, in effect, is a backup system if failure occurs on the main transmission facility. The ability to recognize the failure of a delivered video signal and switch to an alternate signal is based on a configurable algorithm. This increases the level of broadcast availability in the event of a loop (e.g. xDSL) impairment, encoder failure, or facility/network failure. This also allows for multiple set-tops in a single home to negotiate for best available video. This is shown in Figure 10.

The system of the invention permits transcoding of satellite transmission directly to IP multicast MPEG. This takes existing digital transmissions from a satellite and reprocesses them for delivery on an IP Multicast delivery system. The advantages of this are that it lowers the cost of head-end equipment (satellite dish, etc.) by replacing the encoder with a transcoder, and it also maximizes the quality of the signal being delivered from a digital signal source at the head-end. It is only digitized once, and remains that way. At the broadcast provider location a split/distributed head-end (signal from satellite) can also be employed to optimize transport facility cost.

One of the significant features of the present invention is that a viewer is able to see their household's viewing history logs/household repeats (programs that are viewed regularly, or programs that have been seen before, for example). This, obviously, provides a parent the means to determine the amount of television being viewed by children and whether the programs watched are suitable.

The system also provided for still-picture channel browsing by the viewer when available. This means that a viewer will be able to see a still "view" of a program listed in the electronic program guide.

Other features provided by the invention include Multicast download where information required to boot a network device to a multicast group is constantly delivered by a network server. The DHCP server is configured to return the multicast address and port as parameters in a BOOTP response. The network device is programmed to join the multicast group and download a bootstrap program to local memory and boot from the local memory rather than across the network. Also, the system can provide a multicast filesystem wherein a server constantly delivers a read-only filesystem to a multicast group. A network device is programmed to access the filesystem by joining the multicast group and waiting until the requested file appears. Encryption is used for security and compression is used to minimize bandwidth. Since multicast UDP may lose packets, the multicast group is rejoined and holes in the files are filled if holes exist.

### Industrial Applicability

In summary, this invention is applicable to technologies such as xDSL, MPEG-2, MPEG-1, Internet Protocol (IP), including IP multicast and unicast existing copper plant, or any other broadband IP-enabled network including LMDS and EFC. The system will work with a personal computer or with a television set in conjunction with a set-top box and a remote control/keyboard. The system allows broadcast providers to deliver broadcast television and Internet access to subscribers over, for example, existing copper access lines, utilizing the Internet protocol.

While particular embodiments of the invention have been described and illustrated it will be apparent to one skilled in the art that numerous alternatives and variation can be implemented. It is to be understood, however, that such alternatives and variations will fall within the scope of the invention as defined by the appended claims.

## Claims

1. A system for the delivery of broadcast television from a broadcast provider to a subscriber via Internet protocol (IP), said system comprising: means at said broadcast provider's location for retrieving broadcast television signals; means at said broadcast provider's location for configuring said television signals into IP format comprising a multicast transmission originating from a single point of access for transmission over a broadband backbone network; conversion means at said subscriber's location for converting said IP multicast into a format for display on a monitor, said conversion means including a decoder in a set top box or a computer and said monitor is a computer monitor or a television; and a management system for managing a subscriber's access to said television signals.

2. A system as defined in claim 1, wherein said means to configure includes means to encode said television signal into a MPEG format.

3. A system as defined in claim 2, having means to provide concurrent transmission of MPEG-i and MPEG-2 encoded television signals.

4. A system as defined in claim 3, wherein said concurrent transmission increases availability of television signals to said subscriber by recognizing a signal delivery failure through one transmission form and switching to the alternate concurrent transmission.

5. A system as defined in claim 3 or claim 4, wherein said concurrent transmission permits multiple set top boxes at said subscriber's location.

6. A system as defined in any of claims 1 to 5, including means to provide a pay per view event in real time on a self-serve basis.

7. A system as defined in any of claims 1 to 6, including means to provide games on demand on a self serve basis.

8. A method of delivering a TV broadcast from a broadcast provider to a subscriber over a broadband, IP enabled network, the method comprising: obtaining broadcast TV signals for said broadcast provider; converting said broadcast signals to IP format comprising a multicast transmission originating from a single point of access; transmitting said converted signals over said network; at a subscriber's location, converting said IP multicast into a format for display on a computer monitor or a television monitor; and providing management means to control a subscriber's access to said signals.

9. A system for the delivery of broadcast television from a broadcast provider to a subscriber via Internet protocol (IP), said system comprising: means at said broadcast provider's location for retrieving broadcast television signals; means at said broadcast provider's location for configuring said television signals into IP format comprising a multicast transmission originating from a single point of access for transmission over a broadband backbone network; conversion means at said subscriber's location for converting said IP multicast into a format for display on a monitor; and a management system for managing a subscriber's access to said television signals, said management system including an interactive program guide (IPG) containing schedule information relating to programs available for viewing by said subscriber, said schedule being available for display on said monitor.

10. A system as defined in claim 9, wherein said subscriber has means to interface with said IPG displayed on said monitor.

11. A system as defined in claim 10, wherein said means to interface is a remote control or a keyboard.

12. A system as defined in claim 10 or claim 11, including means to script, send and display messages in real time on said monitor.

13. A system as defined in claim 12, wherein said messages include calling line identification notifications and message waiting indications.

14. A system as defined in any of claims 10 to 13, wherein said IPG displays Uniform Resource Locators (URLs) assigned to a channel location.

15. A system as defined in claim 14, wherein selection of one of said URLs provides a subscriber access to a web browser.

16. A system as defined in claim 14, wherein said IPG includes a background process whereby URLs are attached to broadcast programs such that a subscriber has access to underlying links respecting a viewed program.

17. A system as defined in any of claims 10 to 16, including means to remotely record broadcast programs for access by a subscriber on a self-serve basis.

18. A system as defined in any of claims 10 to 16, including means to record selected broadcast programs and to make said recorded programs available to subscribers on a self-serve basis.

19. A system as defined in any of claims 10 to 18, including subscription management means whereby a subscriber is able to self-manage selection and connection of channel packages.

20. A system as defined in any of claims 10 to 19, including banner service means for insertion of information banners in said IPG.

21. A method of delivering TV broadcast from a broadcast provider to a subscriber over a broadband, IP enabled network, the method comprising: obtaining broadcast TV signals for said broadcast provider; converting said broadcast signals to IP format comprising a multicast transmission originating from a single point of access; transmitting said converted signals over said network; at a subscriber's location, converting said IP multicast into a format for display on a monitor; and providing management means to control a subscriber's access to said signals, said management system including an interactive program guide (IPG) containing schedule information relating to programs available for viewing by said subscriber on said monitor.

22. A method as defined in claim 21, wherein said subscriber is provided with means to access said interactive program guide in order to implement service related features provided by said service provider.

23. A method as defined in claim 22, wherein said service related features include the ability to self-configure service options.

24. A system for the delivery of broadcast television from a broadcast provider to a subscriber via Internet protocol (IP), said system comprising: means at said broadcast provider's location for retrieving broadcast television signals; means at said broadcast provider's location for configuring said television signals into IP format comprising a multicast transmission originating from a single point of access for transmission over a broadband backbone network; conversion means at said subscriber's location for converting said IP multicast into a format for display on a monitor; remote diagnostic means for remotely managing said conversion means including resetting and re-initializing said conversion means and notifying said conversion means of new data or software to be retrieved; and a management system for managing a subscriber's access to said television signals.

25. A method of delivering TV broadcast from a broadcast provider to a subscriber over a broadband, IP enabled network, the method comprising: obtaining broadcast TV signals for said broadcast provider; converting said broadcast signals to IP format comprising a multicast transmission originating from a single point of access; transmitting said converted signals over said network; at a subscriber's location, converting said IP multicast into a format for display on a monitor; providing remote diagnostic means for remotely managing said conversion means including resetting and re-initializing said conversion means and notifying said conversion means of new data or software to be retrieved; and providing management means to control a subscriber's access to said signals.

26. A method as defined in claim 25, wherein boot information is delivered by a server at said broadcast provider location to a client device at said subscriber's location by a multicast protocol.

27. A method as defined in claim 26, wherein encryption and compression are used in said multicast protocol.
